**Europäisches Patentamt**

**European Patent Office**

**Office européen des brevets**

(11) Veröffentlichungsnummer: **0 247 231**
**B1**

(12) **EUROPÄISCHE PATENTSCHRIFT**

(45) Veröffentlichungstag der Patentschrift:
07.03.90

(51) Int. Cl.⁴: **F16D 3/62**

(21) Anmeldenummer: **86114451.7**

(22) Anmeldetag: **18.10.86**

(54) **Elastische Wellenkupplung.**

(30) Priorität: **24.05.86 DE 3617578**

(43) Veröffentlichungstag der Anmeldung:
**02.12.87 Patentblatt 87/49**

(45) Bekanntmachung des Hinweises auf die Patenterteilung:
**07.03.90 Patentblatt 90/10**

(84) Benannte Vertragsstaaten:
**AT BE CH DE ES FR GB GR IT LI LU NL SE**

(56) Entgegenhaltungen:
**CH-A- 320 054**
**DE-C- 281 598**
**FR-A- 2 121 038**
**US-A- 3 654 775**

(73) Patentinhaber: **Firma Heinrich Desch KG,
Kleinbahnstrasse 21, D-5760 Arnsberg 1(DE)**

(72) Erfinder: **Hille, Friedrich, Dipl.-Ing., Schlossstrasse 9,
D-5840 Schwerte 3(DE)**

(74) Vertreter: **Fritz, Herbert, Dipl.-Ing., Mühlenberg 74,
D-5760 Arnsberg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elastische Wellenkupplung mit den Merkmalen nach dem Oberbegriff des Hauptanspruchs.

Bei elastischen Wellenkupplungen dieser Art sind zwei Naben, die jeweils eine Antriebswelle bzw. eine Abtriebswelle aufnehmen, konzentrisch von einer Hohlwelle umgeben, wobei die jeweilige Verbindung der Nabe mit der Hohlwelle durch elastische Ringelemente erfolgt. Nach dem kardanischen Prinzip können solche Wellenkupplungen während der Übertragung der Drehmomente Parallelverlagerungen, Winkelverlagerungen sowie Axialverschiebungen aufnehmen.

Bekannt ist (CH-A 320 054) eine biegsame Wellenkupplung mit Kraftübertragung zwischen einer Hohlwelle und den beiden von ihr aufgenommenen Naben, durch in einem regelmäßigen Vieleck angeordnete Stahllamellen. Jede Lamelle ist mit einem Ende an der Innenstirnseite eines Flansches, der außen an einer Nabe vorsteht, angeschraubt und mit dem anderen Ende an der Außenstirnseite eines radial an der Hohlwelle vorstehenden Flansches. Da die Flansche der Hohlwelle einerseits und der Naben andererseits in Querrichtung gesehen nebeneinander liegen, bei dazwischenliegenden Stahllamellen, besteht die Gefahr, daß bei Bruch der Stahllamellen die Momentenübertragung unterbrochen wird, also keine Durchdrehsicherung besteht.

Im übrigen werden die beiden Naben ihrer Länge nach nahezu vollständig von der Hohlwelle aufgenommen, so daß die Gesamtlänge der Kupplung relativ kurz ist. Eine Möglichkeit der Verlängerung der Baulänge durch Umkehrung der gleichen Naben besteht bei dieser bekannten Kupplung nicht.

Bei einer gleichfalls bekannten elastischen Kupplung (US-A 3 654 775) bei der zwei Naben von einer Hohlwelle aufgenommen werden und die Übertragung durch elastische Ringelemente erfolgt, ist Durchdrehsicherung dadurch gegeben, daß in Querrichtung gesehen die Nabenflansche und die Hohlwellenflansche deckungsgleich liegen, so daß sie bei Bruch der elastischen Ringelemente das Drehmoment übertragen. Des weiteren besteht bei dieser bekannten Kupplung die Möglichkeit durch Umrüstung der Teile die Gesamtlänge, das heißt den Abstand von Nabe zu Nabe zu verändern. Als elastische Ringelemete sind bei dieser bekannten Kupplung geschlossene Ringe vorgesehen.

Montagetechnisch ungünstig ist dabei jedoch, daß die Schraubverbindungen im Innenraum der Hohlwelle liegen. Im übrigen bedarf es dabei zum Anschrauben der die Antriebswelle bzw. Abtriebswelle aufnehmenden Nabe an das elastische Ringelement noch eines zusätzlichen scheibenförmigen Zwischenteiles. Die Vielzahl der Einzelteile erfordert einen entsprechenden Zeitaufwand bei der Montage.

Die Aufgabe der vorliegenden Erfindung ist darin zu sehen, eine elastische Kupplung der vorbeschriebenen Art konstruktiv und montagetechnisch einfacher auszubilden, als bei dem vorbeschriebenen Stand der Technik. Diese Aufgabe wird durch eine Kupplung mit den Merkmalen des Hauptanspruchs gelöst. Die Unteransprüche haben bevorzugte Ausführungsformen zum Inhalt.

Eine solche Kupplung hat durch die Außenlage der Hohlwellenflansche und der Nabenflansche für die Montage gut zugängliche Schraubverbindungen. Dennoch ist der Vorteil der Durchdrehsicherung gegeben, da in Querrichtung gesehen die Flansche in Deckung stehen. Außer den elastischen Ringelementen sind im wesentlichen nur drei Teile vorgesehen, nämlich Hohlwelle und die beiden Naben, an denen die Flansche unmittelbar angeformt sind. Als elastisches Ringelement werden gemäß der weiteren Erfindung bevorzugt federnde Laschen in polygonartiger Anordnung verwendet. Man kann Hohlwelle und Naben so anordnen, daß diese vollständig vom Innenraum der Hohlwelle aufgenommen werden, wobei die federnden Laschen jeweils an den äußeren Stirnflächen der Flansche angeschraubt sind. Bei dieser Anordnung ist die Gesamtlänge der Kupplung extrem kurz.

Es besteht aber auch die Möglichkeit, die Naben so anzuordnen, daß der überwiegende Teil ihrer Länge axial an der Hohlwelle vorsteht, wobei die federnden Laschen an den äußeren Stirnflächen der Hohlwellenflansche und an den inneren Flächen der Nabenflansche angeschraubt werden.

Diese Möglichkeit ergibt sich dadurch, daß gemäß der Erfindung beide Stirnflächen der Hohlwellenflansche bzw. der Nabenflansche zum Anschrauben von federnden Laschen geeignet sind. Bei Preisgabe der Durchdrehsicherung besteht schließlich die Möglichkeit, die Kupplung extrem lang aufzubauen, indem die Naben in ihrer vollen Länge axial die Hohlwelle fortsetzen und die federnden Laschen zwischen die Hohlwellenflansche und Nabenflansche eingesetzt sind.

Nach einer weiteren Ausbildung der Erfindung haben die Flansche im Übergangsbereich zum zylindrischen Teil jeweils radiale Anschläge im Hinblick auf die kraftschlüssige Mitnahme im Falle eines Bruches der federnden Elemente. Wenn man die Kupplung für besonders hohe Drehmomente ausbauen will, kann man an jedem Endbereich sowohl an den Nabenflanschen, als auch an den Hohlwellenflanschen beidseitig federnde Ringelemente anschrauben. Mit der beidseitigen Laschenanordnung je Gelenk sind doppelte Drehmomente und doppelte Radialbelastungen möglich. Wenn weiter, wie es bei einer bevorzugten Ausführungsform der Erfindung vorgesehen ist, die Ausnehmungen zwischen den Hohlwellenflanschen in Achsrichtung größer sind, als das entsprechende Maß der Flansche an den Naben, dann gestattet dies nach Lösen der Verbindungsschrauben eine axiale Verschiebung der Hohlwelle in einem Maße, daß eine vorstehend montierte Nabe radial ausgebaut werden kann.

Wenn die elastischen Laschen gebrochen sind, dann können sie ohne Ausbau der Kupplung ersetzt werden. Die Kupplung kann so in sehr kurzer Zeit wieder in einen betriebsbereiten Zustand gebracht werden.

Im folgenden wird ein Ausführungsbeispiel der Erfindung näher beschrieben unter Bezugnahme auf die Zeichnungen.

Fig. 1 ist eine Ansicht einer Wellenkupplung nach der Erfindung in Achsrichtung (mit nur einer Lasche);

Fig. 2 ist ein Schnitt nach II–II von Fig. 1;

Fig. 3 zeigt im Prinzip die doppelt verlängerte Kupplung mit den auf Fig. 1 und 2 dargestellten Teilen;

Fig. 4 stellt eine Längsschnitt entsprechend Fig. 2 dar, jedoch mit doppelten Ringelementen an jedem Endbereich;

Fig. 5 zeigt einen Längsschnitt durch eine nur in einem Endbereich verlängerte Kupplung bei gelösten Verbindungselementen.

Die Kupplung besteht aus zwei gleichen Naben 1, je zur Aufnahme einer Welle geeignet, einer Hohlwelle 2, deren Länge etwas größer ist als die Länge der beiden Naben zusammen und deren Innendurchmesser etwas größer ist als der Außendurchmesser der Naben. Weitere Teile der Kupplung sind zwölf federnde Laschen 3, von denen jeweils sechs ein federndes Ringelement in Form eines Sechsecks bilden. Schließlich gehören zur Kupplung eine entsprechende Anzahl von Verbindungsschrauben 15 mit den erforderlichen Muttern 16, welche dazu dienen, eine Verbindung der federnden Laschen 3 mit den Naben 1 bzw. der Hohlwelle 2 herzustellen.

Jede Nabe 1 hat einen zylindrischen Teil 1a und an einer Stirnseite drei Flansche 10, gleichmäßig verteilt, mit Winkelabständen von 120°. Jeder Flansch 10 hat eine stirnseitige Ebene 11, eine rückseitige Ebene 12 und eine achsparallele Bohrung 13.

Die Hohlwelle 2 hat gleichfalls einen zylindrischen Teil 2a und an beiden Stirnbereichen je drei Flansche 20, gleichfalls mit Winkelabständen von 120°. An jedem Flansch 20 ist stirnseitig eine Ebene 21 gebildet. Gleichfalls ist jeder Flansch mit einer Bohrung 23 versehen. Zwischen den Flanschen 20 sind Ausnehmungen 25 gebildet.

Die Flansche 10 und 20 haben alle das gleiche Profil und zwar ein Trapezprofil. Im Anschluß an den zylindrischen Teil ist jeweils ein radialer Anschlag 24 gebildet.

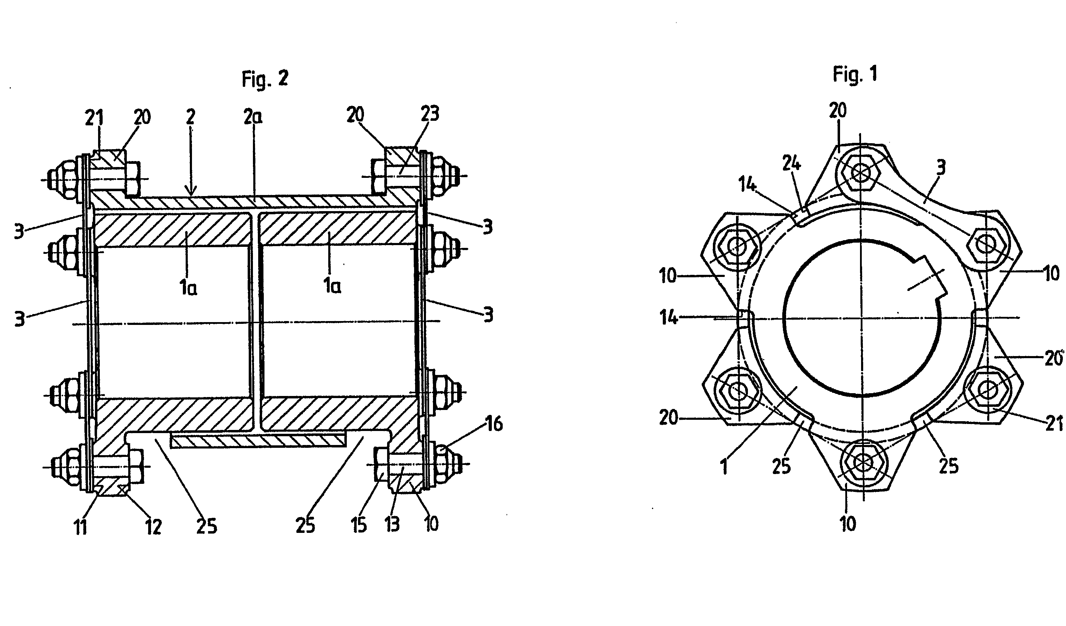

Die Kupplung nach Fig. 1 und 2 ist derart aufgebaut, daß die zylindrischen Teile 1a der beiden Naben von dem zylindrischen Teil 2a der Hohlwelle aufgenommen werden, wobei die Flansche 10 und 20 in Querrichtung gesehen in Deckung sind, das heißt, daß die Flansche 10 der Naben jeweils von den Ausnehmungen 25 an der Hohlwelle aufgenommen werden. An jeder Stirnseite der Kupplung sind also sechs Flansche, abwechselnd Nabenflansche und Hohlwellenflansche, wobei eine gemeinsame stirnseitige Ebene 11 / 21 gebildet ist.

An jeder Stirnseite sind zur Verbindung von Nabe 1 und Hohlwelle 2 sechs federnde Laschen 3 vorgesehen, die an den Ebenen 11, 21 anliegen und mit einem Ende an einem Nabenflansch 10 und mit dem anderen Ende an einem Hohlwellenflansch 20 angeschraubt sind, jeweile mit Hilfe einer Verbindungsschraube 15 bzw. der dazu gehörigen Mutter 16.

Die elastische Kupplung ist drehsteif, doch gestattet sie aufgrund der elastischen Laschen nach dem kardanischen Prinzip relativ große Parallel-und Winkelverlagerungen, sowie Axsialverschiebungen. Die Hohlwelle 2 kann aus montagetechnischen Gründen geteilt ausgeführt sein. Anstelle eines Sechseck s, das aus federnden Laschen besteht, kann auch ein geschlossenes elastisches Ringelement, zum Beispiel ein kreisförmiger Ring, treten.

Dadurch, daß an jeder Stirnseite der Kupplung die Nabenflansche und die Hohlwellenflansche deckungsgleich liegen, ergibt sich auch bei Bruch der elastischen Elemente eine Momentübertragung, weil die Anschläge 24 an den Flanschen zum Zuge kommen und die Kupplung wie eine Klauenkupplung wirkt. Die Kupplung ist somit durchdrehsicher.

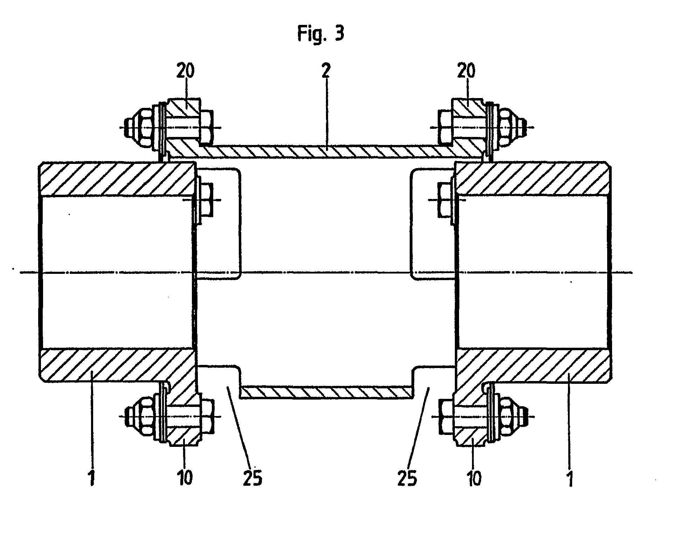

Die gleichen Teile wie auf Fig. 1 und 2 dargestellt können auch in der Weise zusammengebaut werden wie Fig. 3 im Prinzip zeigt, wobei die zylindrischen Teile 1a der Naben jeweils axial gegenüber dem Hohlwelle 2 vorstehen, so daß die Kupplung in axialer Richtung eine größere Baulänge hat und der Abstand der zu kuppelnden Wellen voneinander größer ist. Bei der Bauweise nach Fig. 3 sind die Laschen 3 wiederum stirnseitig an den Flanschen angeschraubt, wobei allerdings bezüglich der Nabenflansche eine Anlage an den jeweiligen rückseitigen Ebenen 12 zustandekommt. Man kann die Kupplungteile aber auch in der Weise kombinieren, daß nur eine Nabe vorsteht, während die andere von der Hohlwelle aufgenommen wird, so daß der achsiale Abstand der Naben dementsprechend geringer wird als auf Fig. 3 dargestellt.

Letztlich kann man die Kupplungteile auch noch länger zusammenbauen wie auf Fig. 3 dargestellt, indem man die Nabenflansche neben den Hohlwellenflanschen anordnet und die Verbindungslaschen dazwischen, so daß der achsiale Abstand der Naben noch größer wird, wobei allerdings der Vorteil der Bruchsicherung nicht mehr gegeben ist.

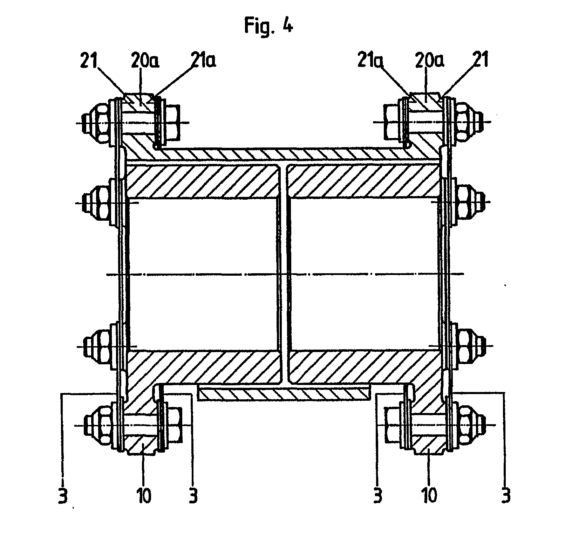

Bei der Kupplung nach Fig. 4 sind an jedem Endbereich die Flansche durch doppelte, aus Laschen bestehende Ringelemente verbunden. Die rückseitigen Laschen liegen dabei an den rückseitigen Ebenen 12 bzw. 21a der Flansche an.

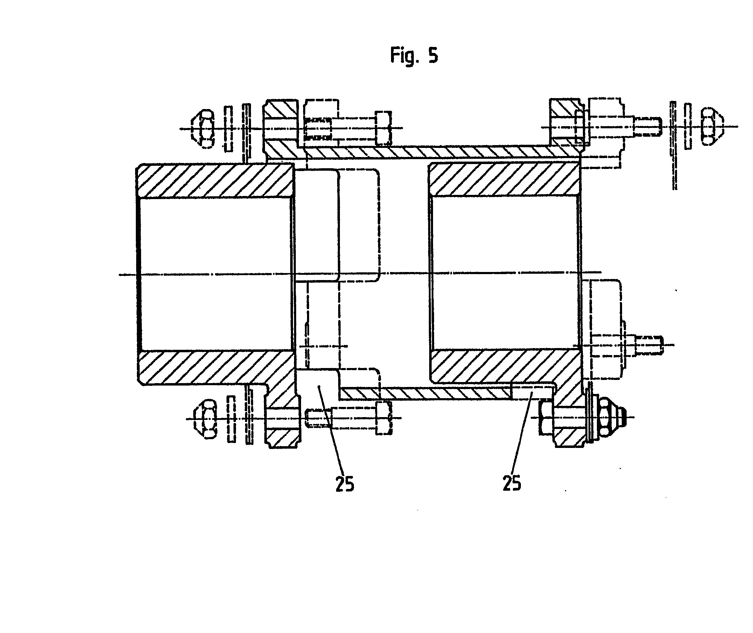

Bei der Ausführungsform nach Fig. 5 ist nur an einem Ende der Hohlwelle 2 der zylindrische Teil 1a einer Nabe vorgebaut, während im anderen Bereich der Hohlwelle der zylindrische Teil der Nabe aufgenommen ist. Diese Kupplung ist also nur einfach verlängert. Dadurch, daß die Ausnehmungen 25 im zylindrishcen Teil der Hohlwelle 2 in Achsrichtung gemessen etwas größer sind als das entsprechende Maß der Flansche, besteht die Möglichkeit nach Lösen der Verbindungsschrauben die Hohlwelle 2 soweit axsial zu verchieben, wie es gestrichelt gezeichnet ist, daß die vorstehende Nabe in radialer Richtung ausgebaut werden kann.

**Patentansprüche**

1. Elastische Wellenkupplung mit den Merkmalen:
   - sie weist eine Hohlwelle (2) auf, die and jeder Strnseite koaxial eine Nabe (1) zumindest über einen Teil der Nabenlänge aufnimmt;
   - die Hohlwelle (2) hat an jeder Stirnseite mehrere

Flansche (20) in radialer Anordnung und gleichmäßig über den Umfang verteilt;
– mit jeder Nabe (1) sind eine gleiche Anzahl radialer Flansche (10) in entsprechender Anordnung verbunden;
– zur deckungsgleichen Aufnahme der Nabenflansche (10) sind an der Hohlwelle zwischen ihren Flanschen (20) Ausnehmungen (25) gebildet;
– Hohlwelle (2) und Naben (1) sind so angeordnet, daß ihre Flansche (20; 10) in Achsrichtung gesehen auf Lücke und in Querrichtung gesehen in Deckung stehen;
– an jeder Stirnseite ist ein elastisches Ringelement mit achsparallelen Schrauben abwechselnd an einem Nabenflansch (10) und einem Hohlwellenflansch (20) angeschraubt;
gekennzeichnet durch die nachfolgenden weiteren Merkmale:
– sowohl die Flansche (10, 20) der Hohlwelle (2) als auch der Naben (1) stehen radial nach außen vor;
– sowohl an den Flanschen (10) der Naben (1) als auch an den Flanschen (20) der Hohlwelle (2) sind stirnseitig und rückseitig Ebenen (11, 12, 21, 21a) zum Anschrauben eines elastischen Ringelementes gebildet.

2. Elastische Wellenkupplung nach Anspruch 1, dadurch gekennzeichnet, daß das elastische Ringelement jeweils aus polygonartig angeordneten einzelnen federnden Laschen (3) besteht.

3. Elastische Wellenkupplung nach Anspruch 1, dadurch gekennzeichnet, daß an den Flanschen im Anschluß an die zylindrischen Teile radiale Anschläge (24) gebildet sind.

4. Elastische Wellenkupplung nach Anspruch 1, dadurch gekennzeichnet, daß die axiale Länge der Ausnehmungen (25) etwas größer als die axiale Länge der Flansche ist.

## Claims

1. Flexible shaft coupling having the following features:
   – it has a hollow shaft (2) which receives at each front face coaxially a hub (1) at least over a part of the hub's length;
   – the hollow shaft (2) has at each front face several flanges (20) arranged radially and uniformly distributed over the circumference;
   – an equal number of radial flanges (10) is connected to each hub (1) in a corresponding arrangement;
   – recesses (25) are formed at the hollow shaft between its flanges (20) for receiving, in a coinciding manner, the flanges (10) of the hub;
   – the hollow shaft (2) and the hubs (1) are arranged in such a manner that their flanges (20; 10) are positioned staggered when seen in axial direction and in coincidence when seen in transversal direction;
   – at each front face, a resilient annular element is screwed by means of paraxial screws alternately to a hub's flange (10) and to a flange (20) of the hollow shaft;

characterized by the following further features:
   – both the flanges (10, 20) of the hollow shaft (2) as well as of the hubs (1) radially project outwardly;
   – both at the flanges (10) of the hubs (1) as well as at the flanges (20) of the hollow shaft (2) there are formed at the front faces and at the rear faces plane surfaces (11, 12, 21, 21a) for the purpose of screwing on a resilient annular element.

2. Flexible shaft coupling as claimed in claim 1, characterized in that the resilient annular element consists in each case of individual spring shackles (3) arranged in the shape of a polygon.

3. Flexible shaft coupling as claimed in claim 1, characterized in that radial stops (24) are formed at the flanges adjacently to the cylindrical parts.

4. Flexible shaft coupling as claimed in claim 1, characterized in that the axial length of the recesses (25) is somewhat greater than the axial length of the flanges.

## Revendications

1. Accouplement d'arbre élastique présentant les caractéristiques suivantes:
   – il présente un arbre creux (2) qui reçoit à chaque face frontale et coaxialement, un moyeu (1), au moins sur une partie de la longueur du moyeu;
   – l'arbre creux (2) présente à chaque face frontale plusieurs flasques (20) disposés radialement et répartis uniformément sur la périphérie;
   – des flasques radiaux (10) en nombre égal sont assemblés à chaque moyeu (1), dans une disposition correspondante;
   – des cavités (25) sont formées sur l'arbre creux, entre ses flasques (20), afin de recevoir, en coïncidence, les flasques de moyeu (10);
   – l'arbre creux (2) et les moyeux (1) sont disposés de façon à ce que leurs flasques (20, 10) soient intercalés lorsqu'on les voit dans la direction axiale, et se recouvrent lorsqu'on on les voit dans la direction transversale;
   – sur chaque face frontale est fixé par vissage un élément annulaire élastique avec des vis parallèles à l'axe, la fixation étant réalisée alternativement avec un flasque de moyeu (10) et avec un flasque d'arbre creux (20);

caractérisé par les caractéristiques supplémentaires suivantes:
   – les flasques (10, 20), tant de l'arbre creux (2) que des moyeux (1) font saillie radialement vers l'extérieur;
   – tant les flasques (10) des moyeux (1) que les flasques (20) de l'arbre creux (2) présentent des plans (11, 12, 21, 21a) disposés frontalement et postérieurement, pour la fixation par vissage d'un élément annulaire élastique.

2. Accouplement d'arbre élastique selon la revendication 1, caractérisé en ce que l'élément annulaire élastique est constitué chaque fois de pattes élastiques individuelles (3) disposées pour former un polygone.

3. Accouplement d'arbre élastique selon la revendication 1, caractérisé en ce que des butées radia

les (24) sont formées sur les flasques au raccord avec les pièces cylindriques.

4. Accouplement d'arbre élastique selon la revendication 1, caractérisé en ce que la longueur axiale des cavités (25) est un peu plus grande que la longueur axiale des flasques.

Fig. 2

Fig. 1

EP 0 247 231 B1

Fig. 3

Fig. 4

EP 0 247 231 B1

Fig. 5